(19) Europäisches Patentamt
European Patent Office
Office européen des brevets

(11) **EP 4 764 968 A1**

(12) **EUROPEAN PATENT APPLICATION**

(43) Date of publication:
24.06.2026 Bulletin 2026/26

(21) Application number: 24307262.6

(22) Date of filing: 20.12.2024

(51) International Patent Classification (IPC):
**G06N 10/20** (2022.01)   **G06N 10/70** (2022.01)

(52) Cooperative Patent Classification (CPC):
**G06N 10/20; G06N 10/70;** G06N 10/40

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Alice & Bob**
**75015 Paris (FR)**

(72) Inventors:
• **ESSIG, Antoine**
  **75015 Paris (FR)**
• **ROUSSEAU, Rémi**
  **75015 Paris (FR)**
• **PERONNIN, Théau**
  **75015 Paris (FR)**

(74) Representative: **Atout PI Laplace**
**Immeuble Up On**
**25 Boulevard Romain Rolland**
**CS 40072**
**75685 Paris Cedex 14 (FR)**

(54) **METHOD OF MEASURING SELF-KERR IN A PHYSICAL QUANTUM SYSTEM CONFIGURED TO HOST A BOSONIC CODE QUBIT**

(57)    A method of measuring self-Kerr in a physical quantum system configured to host a bosonic code qubit, comprises the following operations:

1) providing a physical quantum system configured to host a bosonic code qubit, said physical quantum system comprising (i) a quantum circuit comprising oscillators hosting a buffer or readout mode and a memory mode, and a non-linear element coupling the buffer or readout mode to the memory mode, and (ii) a control circuit configured to apply one or more control signals to the quantum circuit to stabilize the bosonic code qubit in the memory mode and further configured to receive measurement signals from at least the buffer or readout mode,

2) define a coherent state ($\alpha$) for the memory mode, and, for each of a plurality of coherent state amplitudes and each of a plurality of durations (t),

a. prepare, using the control circuit, said coherent state ($\alpha$) in the memory having one of said plurality of coherent state amplitudes,

b. wait for a period of time having one of said duration (t),

c. apply, using the control circuit, one or more control signals to said quantum circuit such that the quantum circuit is in a resonant regime $|i * \omega_a - \omega_b| = j * |\omega_{CS}|$ if said one or more control signals comprise an AC component having an angular frequency $\omega_{CS}$ or $|i * \omega_a - \omega_b| = 0$ if said one or more control signals comprise only DC components, resulting in an interaction, mediated via said nonlinear element, in said physical quantum system which results in a Hamiltonian having a leading term of the general formula $H_{i,(j,0)} \propto \xi_{(j,0)}(a^\dagger)^i b + h.c. \ ... \ ,$ where is the annihilation operator of said memory mode, $i$ is an integer superior or equal to 1, $\omega_a$ is the angular frequency of the memory mode whilst the quantum circuit is in the resonant regime, j is an integer superior or equal to 1, b is the annihilation operator of the buffer or readout mode, $\omega_b$ is the angular frequency of the buffer or readout mode whilst the quantum circuit is in the resonant regime, and $\xi_{(j,0)}$ is the strength of said interaction, and

d. simultaneously to operation 2)c., using the control circuit, receiving measurement signals comprising at least the mode phase and/or mode amplitude of the buffer or readout mode,

3) derive an effective detuning or a decayed mode amplitude for each coherent state amplitude, by fitting of the measurements of operation 2)d. which are associated with said each coherent state amplitude,

4) derive at least one of self-Kerr coefficients, stark-shift detuning, and memory dephasing rate from the plurality of effective detunings or decayed mode amplitudes of operation 3) by fitting of a function of the absolute magnitude squares of coherent state amplitude in said memory mode.

FIG. 2

**Description**

The invention concerns a method of measuring self-Kerr in a physical quantum system configured to host a bosonic code qubit.

The manufacturing of physical qubits currently involves technologies which induce parasitic non-linearities in the qubit mode (also called memory mode). The knowledge of these parasitic non-linearities is useful for downstream calibration and optimal control methods.

Bosonic code qubits known to date all make use of either an asymmetric threaded squid (also known as "ATS", disclosed in the article by Lescanne et al. "Exponential suppression of bit-flips in a qubit encoded in an oscillator" arxiv:1907.11729v1 [quant-ph] 26 Jul 2019) or another non-linear component which use Josephson junctions. These Josephson junctions, whether in the non-linear component or near to it in the circuit all have a self-Kerr component which is one of the most significant of the parasitic non-linearities.

In order to compensate for this self-Kerr (and other spurious effects), or on the opposite use this self-Kerr to tailor subsequent quantum operations for optimal performance (such as choosing the best parameters for the CNOT gate or other quantum gates given the known intrinsic self-Kerr), this self-Kerr needs to be swiftly and accurately physically measured in-situ.

The only known "direct" method of doing so uses a Ramsey-style measurement or tracks deformation of a coherent state by employing a transmon-based readout apparatus, which is inherently detrimental to the performances of the known bosonic code qubits (such as the cat qubit for instance).

"Indirect" methods require a series of other measurements to acquire a big quantity of other physical parameters, and then estimating the self-Kerr from these parameters.

The known methods for measuring self-Kerr will now be discussed.

The article by Marquet et al. "Autoparametric Resonance Extending the Bit-Flip Time of a Cat Qubit up to 0.3 s", PHYSICAL REVIEW X 14, 021019 (2024), https://doi.org/10.1103/PhysRevX.14.021019 discloses a method for experimentally measuring the self-Kerr by "coherent state deformation". This is performed by preparing a coherent state in the memory then letting it evolve, and finally measuring its Wigner function. Fitting the Wigner movie allows to estimate the memory self-Kerr. This method is very complicated to perform, as measuring the Wigner function is a tedious, numerically expensive and long task.

In the article by Berdou et al "One hundred second bit-flip time in a two-photon dissipative oscillator", PRX Quantum 4, 020350 (2023), https://doi.org/10.1103/PRXQuantum.4.020350, the self-Kerr is estimated from a number of other parameters are either experimentally measured or numerically estimated (see TABLE I) of Appendix C.

In the article by Lescanne et al. "Exponential suppression of bit-flips in a qubit encoded in an oscillator" Nature Physics 16.5 (2020): 509-513, the self-Kerr is estimated by measuring the frequency shift versus the photon number calibrated independently, with the photon number being measured via a transmon-based readout apparatus.

In the article by Putterman, Harald, et al. "Preserving phase coherence and linearity in cat qubits with exponential bit-flip suppression", arXiv preprint arXiv:2409.17556 (2024), the self-Kerr of the memory is determined by performing a memory Ramsey experiment for a range of different coherent state amplitudes prepared in the memory, which comprises: preparing a coherent state; displacing the memory mode; waiting a variable time; displacing the memory back with a time dependent phase; measuring the memory mode vacuum population via a transmon-based readout apparatus. From the vacuum population, the average storage frequency for each displacement can be extracted by fitting a particular functional form. The fitted storage mode frequency as a function of the displacement from the experimental data can itself be fit by a simulation to extract the self-Kerr.

Finally, a "flush" measurement method in general is disclosed in the article by Peronnin et al. "Sequential dispersive measurement of a superconducting qubit", Physical Review Letters 124.18 (2020): 180502. However, in this article, the flush protocol is based only on a linear coupling (as opposed to a two photon exchange coupling for example), and it is used for transmon state readout and not for self-Kerr measurement.

As a result, there is no existing transmon-free direct, quick, and accurate self-Kerr measurement for the memory mode in a cat-qubit architecture and/or bosonic code qubit architecture, "direct" meaning here a specific experimental run designed to determine the self-Kerr, as opposed to a complex set of experiments for determining

The invention aims at improving the situation. To this end, the Applicant proposes a method of measuring self-Kerr in a physical quantum system configured to host a bosonic code qubit, comprising the following operations:

1) providing a physical quantum system configured to host a bosonic code qubit, said physical quantum system comprising (i) a quantum circuit comprising oscillators hosting a buffer or readout mode and a memory mode, and a non-linear element coupling the buffer or readout mode to the memory mode, and (ii) a control circuit configured to apply one or more control signals to the quantum circuit to stabilize the bosonic code qubit in the memory mode and further configured to receive measurement signals from at least the buffer or readout mode,

2) define a coherent state for the memory mode, and, for each of a plurality of coherent state amplitudes and each of a plurality of durations,

    a. prepare, using the control circuit, said coherent state in the memory having one of said plurality of coherent state amplitudes,

    b. wait for a period of time having one of said duration ($t$),

    c. apply, using the control circuit, one or more control signals to said quantum circuit such that the quantum circuit is in a resonant regime $|i * \omega_a - \omega_b| = j * |\omega_{CS}|$ if said one or more control signals comprise an AC component having an angular frequency $\omega_{CS}$ or $|i * \omega_a - \omega_b| = 0$ if said one or more control signals comprise only DC components, resulting in an interaction, mediated via said non-linear element, in said physical quantum system which results in a Hamiltonian having a leading term of the general formula $H_{i,(j,0)} \propto \xi_{(j,0)} (a^\dagger)^i b + h.c. ...$, where $a$ is the annihilation operator of said memory mode, $i$ is an integer superior or equal to 1, $\omega_a$ is the angular frequency of the memory mode whilst the quantum circuit is in the resonant regime, $j$ is an integer superior or equal to 1, $b$ is the annihilation operator of the buffer or readout mode, $\omega_b$ is the angular frequency of the buffer or readout mode whilst the quantum circuit is in the resonant regime, and $\xi_{(j,0)}$ is the strength of said interaction, and

    d. simultaneously to operation 2)c., using the control circuit, receiving measurement signals comprising at least the mode phase and/or mode amplitude of the buffer or readout mode,

    3) derive an effective detuning or a decayed mode amplitude for each coherent state amplitude, by fitting of the measurements of operation 2)d. which are associated with said each coherent state amplitude,

derive at least one of self-Kerr coefficients, stark-shift detuning, and memory dephasing rate from the plurality of effective detunings or decayed mode amplitudes of operation 3) by fitting of a function of the absolute magnitude squares of coherent state amplitude in said memory mode.

This method is advantageous because it allows a reasonably fast and direct method to accurately measure the self-Kerr of the circuit, while remaining compatible with a cat qubit or bosonic code qubit architecture since it can be transmon-free.

In various embodiments, the method may present one or more of the following features:

- operation 4) comprises fitting of a polynomial function,
- operation 2)d comprises measuring only the phase of the buffer or readout mode, and in which operation 3) comprises fitting of the measurements of operation 2)d. which are associated with said each amplitude with a linear function,
- operation 2)d comprises measuring only the amplitude of the buffer or readout mode, and in which operation 3) comprises fitting of the measurements of operation 2)d. which are associated with said each amplitude with a linear function,
- operation 2)d. comprises measuring both the phase and the amplitude of the buffer or readout mode, and in which operation 3) comprises fitting of the measurements of operation 2)d. which are associated with said each amplitude with a cosine curve and/or an exponential curve, and/or solving $\dfrac{da^k}{dt} = -\left(\dfrac{\kappa_1}{2} + k^2 \kappa_\phi\right)a^2 - iP(a, a^\dagger,)a^k$

    where $a$ is the annihilation operator of said memory mode, $\kappa_1$ is the single-photon loss rate of the memory mode, $\kappa_\phi$ is the dephasing rate of the memory mode, k is the number of photons of a k-photon pump used to obtain the interaction of operation 2)c, P is a polynomial function of $a$ and $a^\dagger$, and the factors of the polynomial function P depend from at least one of the so-called 4-th order self-Kerr coefficient, the so-called 6-th order self-Kerr coefficient, and the detuning between the memory pulse and the memory frequency,

- the measurement of operation 2)d. is performed at the control signals angular frequency $\omega_{CS}$,
- operation 2)c. comprises using a two-photon pump to obtain an interaction which results in a Hamiltonian of the general formula $H \propto a^{2\dagger} b + h.c,$
- operation 2)c. comprises using a one-photon pump to obtain an interaction which results in a Hamiltonian of the general formula $H \propto a^\dagger b + h.c,$
- operation 2)c. comprises using a k-photon pump to obtain an interaction which results in a Hamiltonian of the general formula $H \propto (a^\dagger)^k b + h.c$ where k is an integer superior or equal to 3,
- the duration of operation 2)b. is smaller than the detuning time of the memory mode, and
- the duration of operation 2)c. is smaller than the detuning time of the memory mode.

The invention further concerns a system for measuring self-Kerr in a physical quantum system configured to host a bosonic code qubit, comprising a housing portion arranged to receive a quantum physical quantum system configured to host a bosonic code qubit, and a processing element arranged to perform the method according to the invention on a quantum physical quantum system received in said housing portion.

The invention further concerns a computer program product comprising instructions which cause the system above to carry out the operations of the method according to the invention.

Other features and advantages of the invention will readily appear in the following description of the drawings, which show exemplary embodiments of the invention and on which:

- Figure 1 represents a lumped element equivalent of the superconducting quantum circuit 2 which was used to validate the method according to the invention,
- Figure 2 represents a general diagram of a method for determining characteristic bit-flip time of a quantum qubit in a superconducting quantum circuit according to the invention,
- Figure 3 represents two diagrams used in the operations of figure 2 to determine the self-Kerr measurements, and
- Figure 4 shows a generic diagram of a system for carrying out the method according to the invention.

The drawings and the following description are comprised for the most part of positive and well-defined features. As a result, they are not only useful in understanding the invention, but they can also be used to contribute to its definition, should the need arise.

The description may make reference or use elements protected or protectable by copyright. The Applicant does not object to the reproduction of those elements in as much as it is limited to the necessary legal publications, however this should not be construed as a waiver of rights or any form of licence.

The method according to the invention relies on a qubit architecture found in bosonic code qubits and cat qubits in particular, and use the interactions between the buffer and the memory used for hosting and stabilizing such qubits.

In the following the method will be described with respect to a cat qubit implementation, and more precisely to a moon cat implementation. For precision's sake, the moon cat qubit is a specific squeezing cat qubit regime discovered by the Applicant, and disclosed in application EP23175147.0. However, the man skilled in the art will understand that this method can be used with any other qubit whose bitflip measure time is of the order of a few seconds. This can encompass all kinds of qubits, whether superconducting (Kerr cat qubit, GKP qubit, transmon, etc.) or not (ion traps, spins, cold atoms, etc.).In the following, due to the moon cat implementation, it will be extensively referred to a memory mode and a buffer mode. However, for different kinds of qubits, such as GKP for instance, the buffer mode may be a readout mode as it is that of a readout resonator.

The following is a summary of cat qubits developed by the Applicant and their variety.

A. Biased-noise qubits

Stabilized cat qubits are known to benefit from a noise bias. More precisely, an effective error channel (e.g., bit errors or "bit flips") is suppressed in an exponential way with the "size" - i.e., the average number of photons - of the Schrödinger cat states of the cat qubits. Other qubits are known to benefit from a noise bias, such as two-photon exchange qubits (as disclosed by Pop et al. "Coherent suppression of electromagnetic dissipation due to superconducting quasiparticles", Nature 508, 369-372, 2014, doi 10.1038/nature13017). In the following, cat qubits will be the main example discussed, but it should be kept in mind that the method applies to any biased-noise qubit having a dissipative stabilization scheme.

According to current knowledge, this suppression should apply to a large class of physical noise processes having a local effect on the phase space of a harmonic oscillator. This includes, but is not limited to, photon loss, thermal excitations, photon dephasing, and various nonlinearities induced by coupling to a Josephson junction.

Recent experiments in the context of quantum superconducting circuits have observed this exponential suppression of bit-flip errors with the average number of photons in the cat states. Because of this noise structure, it is considered that the use of a single repetition code is sufficient to correct the remaining error channel. Indeed, if one wishes to correct only the phase jump, it is sufficient to just use a phase jump error correction code. This can be, for example a repetition code defined in the dual base, or any other classical error correction code.

The field of quantum computing is quite young. This is even more true in the case of the cat qubit domain. In many ways, it behaves like a research domain. As a result, the preferred way of progress is to make changes which may appear very incremental at first sight, but which in fact require significant physics works to be validated and industrialized. In other words, whatever is considered to be the current state of the art is generally left unchanged until a significant roadblock is discovered. This means that known to work solutions are not easily replaced.

B. Cat qubits

Part of the Applicant's research in the past years has concerned with the stabilization of cat qubits. In *"Exponential suppression of bit-flips in a qubit encoded in an oscillator"*, Nature Physics, 2020, R. Lescanne *et al.* demonstrated that cat qubits can be stabilized with a non-linear conversion between two photons of a first mode a - memory mode or cat qubit mode - and one photon of a second mode b - buffer mode.

A cat qubit is defined as a two-dimensional manifold spanned by the so-called cat states $|C_\alpha^\pm\rangle$ which are superpositions of two coherent states $|\alpha\rangle$ and $|-\alpha\rangle$:

$$|C_\alpha^\pm\rangle = N^\pm(|\alpha\rangle \pm |-\alpha\rangle)$$

with:

$$N^\pm = \frac{1}{\sqrt{2(1 \pm e^{-2|\alpha|^2})}}$$

Stabilized cat qubits are known to benefit from a high noise bias, which means that the bit-flip probability is exponentially smaller than the phase-flip probability. More precisely, an effective error channel (e.g., bit errors or "bit-flips") is suppressed in an exponential way with the "size" - i.e. the average number of photons $\bar{n} = |\alpha|^2$ - of the Schrödinger cat states of the cat qubits. As previously mentioned, this exponential suppression of bit-flip errors is only at the cost of linear increase of phase-flip errors.

C. Stabilization schemes

Cat qubits can be stabilized or confined by the following exemplary schemes:

a) a parametric dissipative stabilization, with jump operator $L_2 = \sqrt{\kappa_2}(a^2 - \alpha^2)$, where $\kappa_2$ is the two-photon dissipation rate, $a$ is the photon annihilation operator and $\alpha$ is a complex number defining the cat qubit. This jump operator can be realized by coupling a lossy buffer mode b with dissipation rate $\kappa_b$, and a four-wave mixing device - typically a Josephson junction, an ATS or a DC bias coupled to Josephson junctions - to the cat qubit mode a and by engineering the Hamiltonian $H/\hbar = g_2(a^2-\alpha^2)b^\dagger$ + h. c., where b is the photon annihilation operator of the buffer mode b and $g_2$ is the two-photon coupling rate, by applying to the four-wave mixing device a pump at frequency $|2f_a-f_b|$ and a drive of the buffer mode at frequency $f_b$ provided $g_2 < \kappa_b$.

b) a Kerr Hamiltonian $H/\hbar = \frac{K}{2}(a^{\dagger 2} - \alpha^2)\left(a^2 - \overline{\alpha^2}\right)$, where $K$ is the amplitude of the Kerr Hamiltonian, $a$ is the photon annihilation operator, and $|\alpha|^2$ is the mean photon number.

c) a detuned Kerr Hamiltonian $H/\hbar = \frac{K}{2}(a^{\dagger 2} - \alpha^2)\left(a^2 - \overline{\alpha^2}\right) - \Delta a^\dagger a$, where $K$ is the amplitude of the Kerr Hamiltonian, a is the photon annihilation operator, $\alpha$ is a complex number defining the cat qubit, and $\Delta$ is the detuning factor.

d) a two-photon exchange (TPE) Hamiltonian $H/\hbar = g_2(a^2 - \alpha^2)\sigma_+ + h. c.$, where $g_2$ is the complex two-photon coupling rate, $a$ is the photon annihilation operator, $\alpha$ is a complex number defining the cat qubit, and $\sigma_\pm$ are the lowering and raising operators of the two-level system. This Hamiltonian can be engineered in the same way as the parametric dissipative stabilization a).

e) a dissipative squeezing stabilization, with jump operator $L_{SC} = \sqrt{\kappa_{SC}}\left((\cosh(r)a + \sinh(r)e^{i\theta}a)^2 - \alpha^2\right)$, where $\kappa_{SC}$ is the squeezed two-photon dissipation rate, $a$ is the photon annihilation operator, $\alpha$ is a complex number defining the cat qubit, r and $\theta$ are the modulus and argument of the complex squeezing parameter $\xi = re^{i\theta}$. This jump operator can be realized by coupling a lossy buffer mode b with dissipation rate $\kappa_b$, and a four-wave mixing device - typically a Josephson junction or an ATS -, to the cat qubit mode a and by engineering the Hamiltonian $H/\hbar = g_{SC}$ $((\cosh(r)a + \sinh(r)e^{i\theta}a^\dagger)^2 - \alpha^2)_b^\dagger$ + h.c., where b is the photon annihilation operator of mode b and $g_{SC}$ is the squeezed two-photon coupling rate, with several pumps at frequencies $|2f_a - f_b|$, $f_b$ and $2f_a + f_b$, and a drive of the buffer mode b at frequency $f_b$ provided $g_{SC} < \kappa_b$.

f) a variant of the previous stabilization scheme e), for which the Applicant filed the European patent application EP 23175147.0, in which a bosonic qubit - called *"moon cat qubit"* since the two blobs of the Wigner function have a crescent moon shape - is stabilized by engineering the Hamiltonian $H/_\hbar = \mathrm{g}_2(a^2 + \lambda a^\dagger a - \alpha^2)b^\dagger + \mathrm{h.c.}$, where $g_2$ is the amplitude of a pump at frequency $|2f_a - f_b|$, *a* is the annihilation operator of the cat qubit mode a, $\lambda$ is a complex number which phase and amplitude result from the amplitude of longitudinal coupling produced by a pump at frequency $f_b$, $\alpha$ is a complex number resulting from a drive of the buffer mode b at frequency $f_b$ and b is the annihilation operator of the buffer mode b; a comparison between the moon cat qubit and the squeezed cat qubit could be established by expressing $\lambda$ as a function of the complex squeezing parameter $\xi = re^{i\theta}$ as follows: $\lambda = 2\tanh(r)$.

g) a resonant dissipative stabilization, with jump operator $L_2 = \sqrt{\kappa_2}(a^2 - \alpha^2)$, where $\kappa_2$ is the two-photon dissipation rate, *a* is the photon annihilation operator and $\alpha$ is a complex number defining the cat qubit. This jump operator can be realized by coupling a lossy buffer mode b with dissipation rate $\kappa_b$, and a three-wave mixing device to the cat qubit mode a which engineers the Hamiltonian $H/_\hbar = g_2(a^2\text{-}a^2)b^\dagger + \mathrm{h.c.}$, where b is the photon annihilation operator of the buffer mode b provided the mode frequencies verify substantially $2f_a = f_b$ and $g_2 < \kappa_b$ to which a drive of the buffer mode at frequency $f_b$ is added.

As mentioned above, the Applicant first applied the method described herein to determine the characteristic bit-flip time of a moon cat qubit, that is a cat qubit using the stabilization scheme f) above.

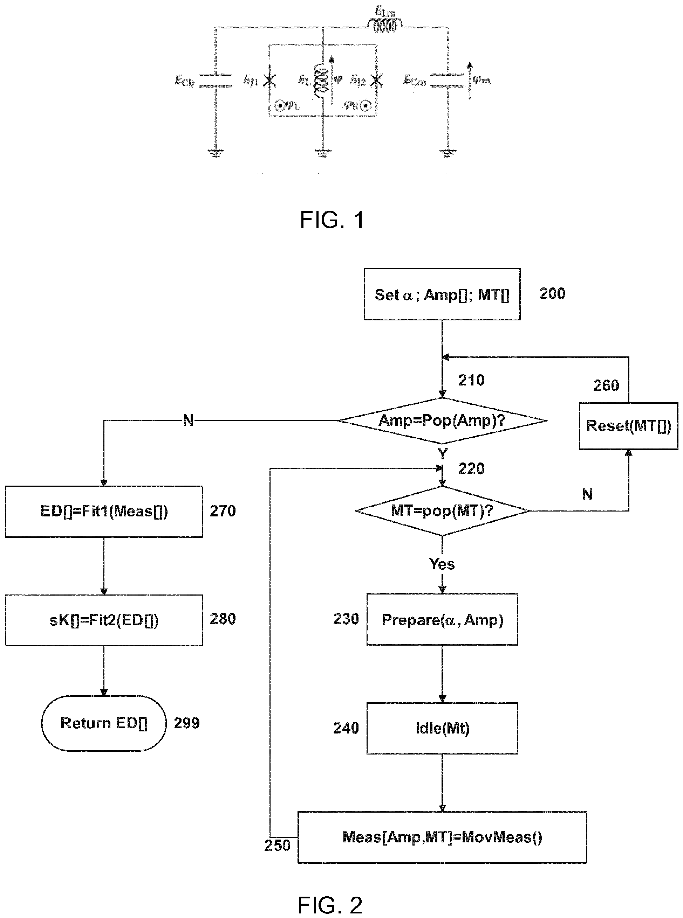

Figure 1 shows a lumped element equivalent of the superconducting quantum circuit 2 which was used to validate the method described below. The circuit 2 comprises a buffer 4 capacitance with an energy $Ec_b$, a memory 6 capacitance with an energy $Ec_m$ and a superconducting phase difference $\varphi i_m$. The memory 6 is connected to an asymmetric threaded squid (or "ATS", see for example the article by Lescanne et. Al "Exponential suppression of bit-flips in a qubit encoded in an oscillator", arXiv:1907.11729v1 [quant-ph] 26 Jul 2019) 8 through a chain of Josephson junction 10 which is modeled as a linear inductance $E_{Lm}$. The buffer 4 is shunted to ground by the ATS 8. The ATS 8 comprises a central chain of Josephson junction 12 which is modeled a linear inductance with energy $E_L$ and a phase difference $\varphi$. The inductance 12 is flanked by two Josephson junctions 14 and 16 with energy $E_{J1}$ and $E_{J2}$ which form two loops threaded by external magnetic fluxes $\varphi\_L$ and $\varphi\_R$.

The below table shows the superconducting quantum circuit 2 parameters and mode parameters at the experiment working point.

| $E_{Cm}/h$ | 9.6 MHz | $E_{Cb}/h$ | 110 MHz |
|---|---|---|---|
| $E_{Lm}/h$ | 35.3 GHz | $E_L/h$ | 33.0 GHz |
| $E_J/h$ | 18.1 GHz | $\Delta E_{J1/J2}/E_{JJ1/J2}$ | -2.95% |
| $\omega_m/2\pi$ | 1.08 GHz | $\omega_b/2\pi$ | 7.90 GHz |
| $\kappa_m/2\pi$ | 2.3 kHz | $K_b/2\pi$ | 18.2 MHz |
| $\varphi_m$ | 0.098 | $\varphi_b$ | 0.234 |

In this experiment, the size of the stabilized coherent states $\alpha^2 = \xi_d/g_2^*$ was selected as 3.5 photons.

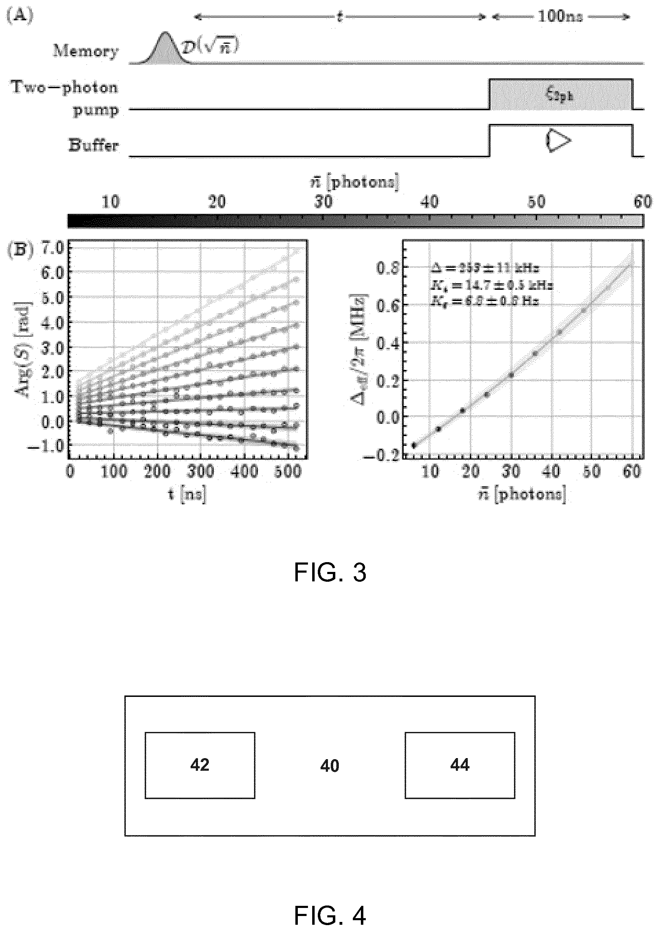

On figure 3, the control circuit for providing the signals which allow to achieve the experiment working point of the table above is not shown, yet the man skilled in the art is familiar with it.

Figure 2 shows a general diagram of a method according to the invention, used with the circuit of figure 1.

As will appear bellow, the method according to the invention comprises two loops in which the same four steps are carried out. These four steps represent an experiment, and the two loops allows to perform this experiment while spanning across of two dimensional array of values.

More precisely, the experiment consists in preparing a coherent state $\alpha$ in the memory 6, and this coherent state varies in amplitude according to one of the dimensions of the array. This coherent state is allowed to evolve for a measurement time which also varies according to one of the dimensions of the array. Finally, the memory 6 is displaced by means of an interaction having a specifically chosen Hamiltonian such that the detuning during each measurement time with each amplitude may be measured. Due to the nature of the interaction, these detunings allow to determine the self-Kerr coefficients as will appear below.

Hence, the method begins with an operation 200 in which the parameters of the experiments are set. More precisely, the coherent state $\alpha$, a first array of amplitude values Amp[] and a second array of measurement times MT[] are received. It will readily appear that other storage forms than vectors could be used, such as a range definition with a sampling formula for determining values within that range, etc. Generally speaking, it is clear that the two above arrays form together a two-dimensional array when they are spanned as described below.

The first loop starts in an operation 210 with the popping of the array Amp[] in order to define the amplitude Amp[] for the second loop. Once Amp is defined, the second loop is initiated in an operation 220 with the popping of the array MT[] in order to define the measurement time MT for each second loop.

Thereafter, the second loop is executed by first preparing the coherent state $\alpha$ with the amplitude Amp on the memory 6 in an operation 230. This can be done for example by driving the memory 6 at its memory mode frequency, that is at the resonant frequency of the memory mode.

The memory 6 is then left evolving for a duration equal to the measurement duration MT in an operation 240. Because the experiment aims at quantifying the self-Kerr by determining the detuning of the circuit, the measurement times MT will have to chosen smaller than the dephasing lifetime $T_\phi$ of the memory, so that it remains in the coherent state $\alpha$.

Finally, in an operation 250, a function MovMeas() applies an interaction to the circuit which is meant chosen to induce an Hamiltonian of the general formula $H_{i,(j,0)} \propto \xi_{(j,0)}(a^\dagger)^i b + h.\ c....$ where $a$ is the annihilation operator of said memory mode, i is an integer superior or equal to 1, j is an integer superior or equal to 0, and b is the annihilation operator of the buffer mode. While this interaction is being applied, the function MovMeas() comprises measuring the buffer at its buffer mode frequency in order to allow determination of the effective detuning for the couple (Amp; MT).

In the case of the moon cat qubit described above, it is natural to use the two-photon pump already used to stabilize the Moon cat qubit. This two-photon pump driving the common "sigma" flux of the ATS at twice the TPE (two photons exchange) parametric pump frequency (i.e. the absolute difference between twice the memory mode frequency and the buffer mode frequency) whilst the ATS is DC flux-biased at the saddle point (specifically here

$$\varphi_\Sigma(t) = \frac{3\pi}{2} + \delta(t) \quad \text{and} \quad \varphi_\Delta(t) = -\frac{\pi}{2} + \quad \sigma(t),$$

where $\sigma(t)$ is optional, but the amplitude and phase of $\sigma(t)$ can be chosen simply to cancel the inevitable linear stark-shift of the modes induced by $\varphi_\Sigma(t)$). Simultaneously, the output field of the buffer mode is measured, which provides a measure the operator $a^2$ when the measurement time is short compared to $1/\kappa_2$ (where $\kappa_2$ is the TPE rate).

In the Heisenberg picture, the evolution of $a^2$ under the Hamiltonian $\quad H = \Delta a^\dagger a - \frac{K_4}{2} a^{\dagger 2} a^2 -$

$\frac{K_6}{6} a^{\dagger 3} a^3$ follows: $\frac{da^2}{dt} = -i(\Delta - K_4 - 2K_4 a^\dagger a - K_6 a^\dagger a^2 - K_6 a^{\dagger 2} a^3)a^2$ ., where $K_4$ is the so-called 4-th order self-Kerr coefficient, $K_6$ is the so-called 6-th order self-Kerr coefficient, and $\Delta$ is the detuning between the memory pulse and the memory frequency.

For a small evolution time compared to $(|\alpha|^2 K_4)^{-1}$, $(|\alpha|^4 K_6)^{-1}$, $T_1$ (the average single-photon loss time from the memory), and $T_\phi$ (the dephasing lifetime), the memory states remains in a coherent state with amplitude $\alpha$. The article by Marquet et al. "Autoparametric Resonance Extending the Bit-Flip Time of a Cat Qubit up to 0.3 s" referenced in the introduction shows how to measure $T_1$ and $T_\phi$.

Therefore, the effective detuning rotating the state is:

$$\Delta_{\text{eff}} = 2\Delta - K_4 - 2K_4 |\alpha|^2 - K_6 |\alpha|^{3/2} - K_6 |\alpha|^{5/2}$$

In other embodiments, the interaction of operation 240 may yield a Hamiltonian of the general formula $H \propto a^\dagger b + h.c.$

This may for instance be achieved by using a one-photon pump in operation 250. In particular, for small side-junction energy asymmetry $\Delta E_J$ in the case of the non-linear element being an ATS, assuming small pump amplitude and phase, the potential of the ATS can be approximated as:

$$U(t) = 2\Delta E_J \sigma(t)^2 \left(1 - \frac{1}{2}\varphi^2\right).$$

Thus, for a one-photon pump (that is, a pump in sigma mode on the ATS with angular frequency $\omega_p = (\omega_{b,1} - \omega_{a,1})/2$, where the subscript "1" means that the linear stark-shift on the memory/buffer $\Delta_{a/b}$ has been taken into account $\omega_{a/b,1} = \omega_{a/b}$

$+ \Delta_{a/b}$), and after performing a rotating wave approximation, the so-called "beam-splitter" Hamiltonian is obtained between the buffer mode and memory mode:

$$H_{\omega_p=(\omega_{b,1}-\omega_{a,1})/2} = \hbar g_{\text{OPE}} \left( ab^\dagger + a^\dagger b \right)$$

where "OPE" stands for *"one-photon exchange"*, and $g_{\text{OPE}} = \Delta E_J \sigma_{OPE}^2 \varphi_a \varphi_b / 8\hbar$ with $\sigma_{OPE}$ the amplitude of the one-photon parametric pump. In the regime where $g_{\text{OPE}} \ll \kappa_b$ (the decay rate from the buffer mode), then this interaction induces a one-photon dissipation rate from the memory mode

$$\kappa_a^{\text{reset}} = 4 g_{\text{OPE}}^2 / \kappa_b.$$

The difference in this case is that the functional form of the fitting will differ by a factor 2, specifically

$$\text{that } \frac{da^2}{dt} = -i(\Delta - K_4 a^\dagger a - K_6/2 a^{\dagger 2} a^3)a \text{ such that } \Delta_{\text{eff}} = \Delta - K_4 |\alpha|^2 - K_6/2 |\alpha|^4.$$

Furthermore, the interaction may use a k-photon pump. In this case, the general Kerr Hamiltonian can be written as:

$$H_{kerr}/\hbar = -\sum_n \frac{K_n}{\left(\frac{n}{2}\right)!} (a^\dagger)^{n/2} a^{n/2}$$

Considering a k-photon exchange term, we have the following Hamiltonian $\frac{H_k}{\hbar} = g a^k b^\dagger + h.c.$

Measuring the buffer while this interaction is turned on leads to the measurement of $a^k$ operator.

$$\frac{da^k}{dt} = i \left[ \frac{H}{\hbar}, a^k \right]$$

Normal ordering all terms in the previous equation leads to an effective detuning $\Delta_{\text{eff}} = f(|\alpha|)$, where $f(|\alpha|)$ is a polynomial.

Hence, for all values of i superior of equal to 1, with is being an integer, operation 250 allows to measure the $a^k$ operator to determine the effective detunings as will be explained below. The resulting effective detuning is stored in table along its coordinates Amp and MT. The execution of these measurements may include demodulating by the control circuit of the signal received from the buffer according to the frequency conditions of the resonant regime, as explained below with respect to operation 270.

After operation 250 ends, the second loop repeats with operations 220 to 250, with a new MT value being popped in operation 220. Once the array MT[] is empty, the second loop is finished, the array MT is reset in an operation 260, and operations 210 to 260 are repeated with a new value Amp to perform a new second loop with the new value of Amp. Once all of the values of Amp[] have been explored, two sequential operations performed, and a first function Fit1() fits the elements of table Meas[] to determine the effective detunings for a first value of Amp[] in an operation 270. Thereafter, another function Fit2() is executed in an operation 280 to the effective detunings of vector ED[] obtained as the result of operation 270 to determine the self-Kerr coefficients. Finally, the method may end in an operation 299.

In the example above, the two dimensional array is spanned column by column of measurement times for each amplitude value. It will readily appear that the two loops can be rearranged so as to span the two-dimensional array formed by the possible values of Amp and MT. It will be obvious that this two-dimensional array can be explored differently, for example line by line, of by shuffling of all of the couples of measurement time MT and amplitudes and applying them one by one.

In the example above using a two-photon pump, only the phase of the buffer 8 is measured, which leads to a heterodyne measurement. In this case, function Fit1() will linearly fit all of the measurements which relate to a given Amp value, and the slope of this line may be used provide the effective detuning values.

Other interactions will yield different results and methods. For example, when using the one-photon pump, the measurement will be homodyne, and both the phase and the amplitude of the buffer 8 are measured. In this case, function Fit2() performs one or more fittings depending on the situation:

(1) if relaxation and dephasing are negligible, the fitting can be based on a cosine curve,
(2) if the Kerr is negligible, the fitting can be based on an exponential curve,
(3) otherwise, the fit relies on solving a differential equation expressed below (which can be numerically solved for instance).

Typically, (1) and (2) are simpler to perform than (3), hence Fit(2) may perform the fittings of (1) and (2) to check if one of these two fittings is sufficiently precise, and if both fittings have a poor quality, then (3) may be performed. Of course, other approaches can be used if the case (1), (2) or (3) can be determined a priori.

In this manner, the effective detuning value may be obtained (e.g. as the frequency of the fitted cosine function, or as the decay rate of the fitted exponential function). This detuning can then be fitted for different initial states amplitudes, yielding $\Delta$, $K_4$ and $K_6$.

In the case that a k-photon pump is used, the same principles remain valid : by further using the measured amplitude, the memory coherence time can also be extracted. For instance, if one considers the two loss operators corresponding to relaxation and dephasing: $L_1 = \sqrt{\kappa_1}\, a$ and $L_\phi = \sqrt{2\kappa_\phi}\, a^\dagger a$, $a$ being the annihilation operator, $\kappa_1$ being the single-photon loss rate of the memory mode, and $\kappa_\phi$ being the dephasing rate of the memory mode, and, considering a k-photon exchange term, the following Hamiltonian $\frac{H_k}{h} = g a^k b^\dagger + h.c.$, measuring the buffer while this interaction is turned on leads to the measurement of $a^k$ operator $\frac{da^k}{dt} = -\left(\frac{\kappa_1}{2} + k^2\kappa_\phi\right)a^k$

Thus, the signal amplitude decays at a rate $\frac{\kappa_1}{2} + k^2\kappa_\phi$. By fitting the decay rate of the amplitude decrease, one can measure the effective rate $\frac{\kappa_1}{2} + k^2\kappa_\phi$. Then one can measure the rate $\kappa_1$ with a standard technique and have access to $\kappa_\phi$.

With k equal to two, the case (3) above comes to solving the following differential equation $\frac{da^2}{dt} = -\left(\frac{\kappa_1}{2} + 4\kappa_\phi\right)a^2 - i(\Delta - K_4 - 2K_4 a^\dagger a - K_6 a^{\dagger 2} a^3)\, a^2$. More generally, when a k-photon pump is used to induce the interaction discussed above, the case (3) requires solving a differential equation of the type $\frac{da^k}{dt} = -\left(\frac{\kappa_1}{2} + k^2\kappa_\phi\right)a^2 - iP(a, a^\dagger,)a^k$ where $a$ is the annihilation operator of said memory mode, $\kappa_1$ is the single-photon loss rate of the memory mode, $\kappa_\phi$ is the dephasing rate of the memory mode, P is a polynomial function of $a$ and $a^\dagger$, and the factors of the polynomial function P depend from at least one of $K_4$ (the so-called 4-th order self-Kerr coefficient), $K_6$ (the so-called 6-th order self-Kerr coefficient), and $\Delta$ (the detuning between the memory pulse and the memory frequency).

Generally speaking, when the stabilization of the bosonic code qubit is achieved by means of a j-photon parametric pump, the pump used to obtain the interaction must have an angular frequency $\omega_p$ such that $|i\omega_a - \omega_b| = j\omega_p$ where $\omega_a$ is the angular frequency of the memory mode and $\omega_b$ is the angular frequency of the buffer mode, and j is the number of photons of said parametric pump stabilizing the qubit. This is crucial as the frequency of the pump will define the frequency of the measurements to be made in the buffer. Hence, it is necessary for this relationship to be observed if the measurement of the buffer is to remain relevant.

After operation 270 is performed, the function Fit2() fits the result of operation 260 on a polynome which roots are direcly related to the self-Kerr coefficients.

Similarly, while the above has been made in reference to a moon cat implementation, it will work more generally with any kind of cat qubit, but it may also work with other cat qubits such as the so-called *"resonant cat"* described in application EP21306965.1, and in general with other bosonic code qubits. In the case of the resonant cat qubit, because there is no parametric pump, the above matching frequency remains valid, but with the little tweak. More precisely, since there is no pump, operation 230 is tailored to set the buffer mode to a frequency at least 100Mhz away from the matching

frequency $2\omega_a - \omega_b$. Then, in operation 250, by flux-biasing the 3-wave-mixing nonlinear element, the frequencies of the memory and buffer are shifted into resonance, with $2\omega_a - \omega_b = 0$.

Furthermore, instead of parametrically pumping an ATS, the nonlinear element could be a DC-biased Josephson junction, in which case $\omega_p$ is actually $\omega_{Dc}$ and selected by the voltage applied across the Josephson junction. Other setups could work, such as using a SNAIL for the resonant cat.

Figure 3 shows an example of the fitting performed by function Fit1() (left) and by the function Fit2() (right). As shown on the right chart, the effective detunings are plotted as a function of the average number of photons in the cat qubit or the bosonic code qubit. If this number is not known or measured beforehand, the average number of photons will have to be estimated at a later stage, it will constitute a multiplier of the eastern values of the figure.

Figure 4 shows a generic diagram of a system for carrying out the above described method. System 40 comprises a housing portion 42 and a processing portion 44.

Housing portion 42 is arranged to receive a superconducting quantum circuit for which the quantum bit characteristics time is sought. Processing portion 44 is arranged to perform the method as described above.

The processing portion 44 may comprise any suitable means e.g. a command circuit for defining and preparing the coherent state and/or achieving the desired interaction, or any other means for obtaining the measurement signals, and for carrying out the calculus steps of the method, e.g. performing the various fittings and/or determining at least one of self-Kerr coefficients, stark-shift detuning, and memory dephasing rate from the plurality of effective detunings or decayed mode amplitudes.

**Claims**

1. A method of measuring self-Kerr in a physical quantum system configured to host a bosonic code qubit, comprising the following operations:

   1) providing a physical quantum system configured to host a bosonic code qubit, said physical quantum system comprising (i) a quantum circuit comprising oscillators hosting a buffer or readout mode and a memory mode, and a non-linear element coupling the buffer or readout mode to the memory mode, and (ii) a control circuit configured to apply one or more control signals to the quantum circuit to stabilize the bosonic code qubit in the memory mode and further configured to receive measurement signals from at least the buffer or readout mode,
   2) define a coherent state ($\alpha$) for the memory mode, and, for each of a plurality of coherent state amplitudes and each of a plurality of durations (t),

      a. prepare, using the control circuit, said coherent state ($\alpha$) in the memory having one of said plurality of coherent state amplitudes,
      b. wait for a period of time having one of said duration (t),
      c. apply, using the control circuit, one or more control signals to said quantum circuit such that the quantum circuit is in a resonant regime $|i * \omega_a - \omega_b| = j * |\omega_{CS}|$ if said one or more control signals comprise an AC component having an angular frequency $\omega_{CS}$ or $|i * \omega_a - \omega_b| = 0$ if said one or more control signals comprise only DC components, resulting in an interaction, mediated via said non-linear element, in said physical quantum system which results in a Hamiltonian having a leading term of the general formula $H_{i,(j,0)} \propto \xi_{(j,0)}(a^\dagger)^i b + h.c. \ldots$, where $a$ is the annihilation operator of said memory mode, i is an integer superior or equal to 1, $\omega_a$ is the angular frequency of the memory mode whilst the quantum circuit is in the resonant regime, j is an integer superior or equal to 1, b is the annihilation operator of the buffer or readout mode, $\omega_b$ is the angular frequency of the buffer or readout mode whilst the quantum circuit is in the resonant regime, and $\xi_{(j,0)}$ is the strength of said interaction, and
      d. simultaneously to operation 2)c., using the control circuit, receiving measurement signals comprising at least the mode phase and/or mode amplitude of the buffer or readout mode,

   3) derive an effective detuning or a decayed mode amplitude for each coherent state amplitude, by fitting of the measurements of operation 2)d. which are associated with said each coherent state amplitude,
   4) derive at least one of self-Kerr coefficients, stark-shift detuning, and memory dephasing rate from the plurality of effective detunings or decayed mode amplitudes of operation 3) by fitting of a function of the absolute magnitude squares of coherent state amplitude in said memory mode.

2. Method according to claim 1, in which operation 4) comprises fitting of a polynomial function.

3. Method according to claim 1 or 2, in which in which operation 2)d comprises measuring only the phase of the buffer or readout mode, and in which operation 3) comprises fitting of the measurements of operation 2)d. which are associated with said each amplitude with a linear function.

4. Method according to claim 1 or 2, in which operation 2)d comprises measuring only the amplitude of the buffer or readout mode, and in which operation 3) comprises fitting of the measurements of operation 2)d. which are associated with said each amplitude with a linear function.

5. Method according to claim 1 or 2, in which operation 2)d. comprises measuring both the phase and the amplitude of the buffer or readout mode, and in which operation 3) comprises fitting of the measurements of operation 2)d. which are associated with said each amplitude with a cosine curve and/or an exponential curve, and/or solving

$$\frac{da^k}{dt} = -\left(\frac{\kappa_1}{2} + k^2\kappa_\phi\right)a^2 - iP(a, a^\dagger,)a^k$$ where $a$ is the annihilation operator of said memory mode, $\kappa_1$ is the single-photon loss rate of the memory mode, $\kappa_\phi$ is the dephasing rate of the memory mode, k is the number of photons of a k-photon pump used to obtain the interaction of operation 2)c, P is a polynomial function of $a$ and $a^\dagger$, and the factors of the polynomial function P depend from at least one of the so-called 4-th order self-Kerr coefficient ($K_4$), the so-called 6-th order self-Kerr coefficient ($K_6$), and the detuning between the memory pulse and the memory frequency ($\Delta$).

6. Method according to one of claims 1 to 5, in which the measurement of operation 2)d. is performed at the control signals angular frequency $\omega_{CS}$.

7. Method according to one of the preceding claims, in which operation 2)c. comprises using a two-photon pump to obtain an interaction which results in a Hamiltonian of the general formula $H \propto a^{2\dagger}b + h.c.$

8. Method according to one of the preceding claims, in which operation 2)c. comprises using a one-photon pump to obtain an interaction which results in a Hamiltonian of the general formula $H \propto a^\dagger b + h.\,c.$

9. Method according to one of the preceding claims, in which operation 2)c. comprises using a k-photon pump to obtain an interaction which results in a Hamiltonian of the general formula $H \propto (a^\dagger)^k b + h.\,c$ where k is an integer superior or equal to 3.

10. Method according to one of the preceding claims, in which the duration of operation 2)b. is smaller than the detuning time of the memory mode.

11. Method according to one of the preceding claims, in which the duration of operation 2)c. is smaller than the detuning time of the memory mode.

12. System for measuring self-Kerr in a physical quantum system configured to host a bosonic code qubit, comprising a housing portion arranged to receive a quantum physical quantum system configured to host a bosonic code qubit, and a processing element arranged to perform the method of one of claims 1 to 11 on a quantum physical quantum system received in said housing portion.

13. Computer program product comprising instructions which cause the system of claim 12 to carry out the operations of the method of one of claims 1 to 11.

FIG. 1

FIG. 2

FIG. 3

FIG. 4

## EUROPEAN SEARCH REPORT

Application Number

EP 24 30 7262

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 383 140 A1 (ALICE & BOB [FR]) 12 June 2024 (2024-06-12) * paragraph [0002] * * paragraph [0014] * * paragraph [0019] * * paragraph [0024] - paragraph [0037] * * paragraph [0049] * * paragraph [0073] * * paragraph [0082] * * figures 1-6 * ----- | 1-13 | INV. G06N10/20 G06N10/70 |
| | | | TECHNICAL FIELDS SEARCHED (IPC) G06N |

The present search report has been drawn up for all claims

| Place of search | Date of completion of the search | Examiner |
|---|---|---|
| The Hague | 1 August 2025 | Baldan, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 7262

This annex lists the patent family members relating to the patent documents cited in the above-mentioned European search report.
The members are as contained in the European Patent Office EDP file on
The European Patent Office is in no way liable for these particulars which are merely given for the purpose of information.

01-08-2025

| Patent document cited in search report | | Publication date | Patent family member(s) | | Publication date |
|---|---|---|---|---|---|
| EP 4383140 | A1 | 12-06-2024 | CN | 120322778 A | 15-07-2025 |
| | | | EP | 4383140 A1 | 12-06-2024 |
| | | | IL | 320835 A | 01-07-2025 |
| | | | WO | 2024121274 A1 | 13-06-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 23175147

- EP 21306965

**Non-patent literature cited in the description**

- **LESCANNE et al.** Exponential suppression of bit-flips in a qubit encoded in an oscillator. *arxiv:1907.11729v1*, 26 July 2019
- **MARQUET et al.** Autoparametric Resonance Extending the Bit-Flip Time of a Cat Qubit up to 0.3 s. *PHYSICAL REVIEW X*, 2024, vol. 14, 021019, https://doi.org/10.1103/PhysRevX.14.021019
- **BERDOU et al.** One hundred second bit-flip time in a two-photon dissipative oscillator. *PRX Quantum*, 2023, vol. 4, 020350, https://doi.org/10.1103/PRX-Quantum.4.020350
- **LESCANNE et al.** Exponential suppression of bit-flips in a qubit encoded in an oscillator. *Nature Physics*, 2020, vol. 16 (5), 509-513
- **PUTTERMAN, HARALD et al.** Preserving phase coherence and linearity in cat qubits with exponential bit-flip suppression. *arXiv:2409.17556*, 2024

- **PERONNIN et al.** Sequential dispersive measurement of a superconducting qubit. *Physical Review Letters*, 2020, vol. 124 (18), 180502
- **POP et al.** Coherent suppression of electromagnetic dissipation due to superconducting quasiparticles. *Nature*, 2014, vol. 508, 369-372
- **R. LESCANNE.** Exponential suppression of bit-flips in a qubit encoded in an oscillator. *Nature Physics*, 2020
- **LESCANNE.** Exponential suppression of bit-flips in a qubit encoded in an oscillator. *arXiv:1907.11729v1*, 26 July 2019
- **MARQUET et al.** *Autoparametric Resonance Extending the Bit-Flip Time of a Cat Qubit up to 0.3 s*